# EUROPEAN PATENT APPLICATION

(11) **EP 4 814 352 A1**
(43) Date of publication of application: **30.09.2026**
(21) Application number: 25166906.5
(22) Date of filing: 28.03.2025
(51) Int. Cl.: F16K 11/10, F16K 37/00

(54) **RECIRCULATION VALVE MONITORING**

(71) Applicant: SCHROEDAHL GmbH, 51580 Reichshof-Mittelagger (DE)
(72) Inventor: LEPPERHOFF, Thomas, 51580 Reichshof--Mittelagger (DE)
(74) Representative: Arnold & Siedsma

(57) **Abstract**

In the described technology, an automatic recirculation valve position monitoring device includes a magnet (102) affixed to a lifting cone (104) of an automatic recirculation valve (100). The movement of the lifting cone causes a corresponding movement of the magnet. The device includes a sensor (106) affixed to an external surface of the automatic recirculation valve, wherein the sensor is configured to measure a position of the magnet based on magnetic flux density created by the magnet. By monitoring the change in magnetic flux, the device can report a position of the valve, and thus a flow rate of fluids through the valve.

## Description

This disclosure relates to methods for monitoring positions of automatic recirculation valves.

### BACKGROUND

Industries such as power plants, chemical processing, and manufacturing are increasingly relying on digital information for operations. Receiving digital information from process valves would be useful to allow effective control of a process flow. It is desirable that valves provide a digital signal directed to an operating state of the valve. For example, such a signal could be received from valves that are upstream of pumps and used to adjust the performance of the pump, the valve, and any other process devices.

Conventional systems do not have measuring devices for certain valves, such as pump safety valves, that indicate the position of the main cone. Without this position, an accurate current flow calculation is not possible. The pump manufacturers can only design their pumping systems based on pump characteristics, which means that there is a certain degree of inaccuracy. This inaccuracy may allow for a power surplus or deficit and pump damage due to low flow conditions.

Therefore, there is a current need in the industry for a pump safety valve that provides a position of the cone of the valve.

### BRIEF SUMMARY

The present disclosure relates to a valve position monitoring device includes a magnetic component affixed to a lifting cone of a valve, wherein the movement of the lifting cone causes a corresponding movement of the magnetic component. The valve monitoring device includes a sensor affixed to an external surface of the automatic recirculation valve, wherein the sensor is configured to measure a position of the magnetic component based on magnetic flux density created by the magnetic component. By monitoring the change in magnetic flux, the device can report a position of the valve, and thus a flow rate of fluids through the valve. In one aspect, the valve is an automatic recirculation valve.

The magnetic component can be affixed to the lifting cone on a downstream portion of the lifting cone. In another aspect, the magnetic component is affixed to the primary flow lifting cone via a mechanical linkage. In another aspect, the magnetic component is a neodymium magnet.

The sensor can be a magnetometer sensor capable of identifying a magnetic flux density emitted by the magnetic component. In another aspect, the sensor is configured to output a signal corresponding to a change in the identified magnetic flux density. In another aspect, the magnetic component is affixed to the lifting cone via a screwed connection. In another aspect, the sensor is mounted externally to the automatic recirculation valve and/or the downstream flow. In another aspect, the magnetic component is affixed to a bypass lifting cone on a downstream portion of the bypass flow. In another aspect, the magnetic component is affixed to a mechanical linkage that causes the magnetic component to rotate about an axis as the lifting cone is raised and/or lowered.

An automatic recirculation valve position monitoring device according to the present disclosure may include a first magnetic component affixed to a lifting cone in a primary flow of an automatic recirculation valve, wherein movement of the lifting cone causes a corresponding movement of the first magnetic component. The automatic recirculation valve position monitoring device includes a first sensor affixed to an external surface of the automatic recirculation valve, wherein the sensor is configured to measure a position of the magnetic component based on magnetic flux density created by the first magnetic component. The automatic recirculation valve position monitoring device includes a second magnetic component affixed to a bypass lifting cone on a downstream portion of the bypass flow, wherein movement of the bypass lifting cone causes a corresponding movement of the second magnetic component, and a second sensor affixed to an external surface of the automatic recirculation valve, wherein the second sensor is configured to measure a position of the second magnetic component based on magnetic flux density created by the second magnetic component.

The present disclosure also relates to a method to measure a position of automatic recirculation valves, including affixing a magnetic component to a lifting cone of an automatic recirculation valve, wherein movement of the lifting cone causes a corresponding movement of the magnetic component, and affixing a sensor to an external surface of the automatic recirculation valve. The method may include engaging a pump to deliver fluids to the automatic recirculation valve. The method may include monitoring a movement of the lifting cone by sensing, with the sensor, a change in the magnetic flux density created by the magnetic component. The method may also include generating a signal by the sensor corresponding to the sensed change in the magnetic flux density created by the magnetic component.

Other technical features may be readily apparent to one skilled in the art from the following figures, descriptions, and claims.

These and other steps will be discussed in detail below. Thus, the conduct of one or more additional steps beyond those described herein in performing a multi-step process of the invention falls within the scope of the claim coverage of this invention.

### BRIEF DESCRIPTION OF THE SEVERAL VIEWS OF THE DRAWINGS

The presently disclosed subject matter can be better understood by referring to the following example figures.
FIG. 1 is a cutaway illustration of a side view of an automatic recirculation valve in accordance with the present disclosure..
FIG. 2 is a illustration of a side perspective view of an automatic recirculation valve in accordance the present disclosure.
FIG. 3 is a cutaway illustration of a side view of an automatic recirculation valve with an adaptor in accordance the present disclosure.
FIG. 4 is a graph of magnetic flux density based on valve position in accordance the present disclosure.
FIG. 5 is a graph of a fifth-degree polynomial function of the z-axis data of magnetic flux density based on valve position in accordance the present disclosure.
FIG. 6 is a graph of magnetic flux density over time for a rotating primary magnet in accordance the present disclosure.

### DETAILED DESCRIPTION

### Definitions

The terminology used herein is for the purpose of describing particular embodiments only and is not intended to be limiting of the presently disclosed subject matter.

While the following terms are believed to be well understood by one of ordinary skill in the art, the following definitions are set forth to facilitate explanation of the presently disclosed subject matter.

All technical and scientific terms used herein, unless otherwise defined below, are intended to have the same meaning as commonly understood by one of ordinary skill in the art. References to techniques employed herein are intended to refer to the techniques as commonly understood in the art, including variations on those techniques or substitutions of equivalent techniques that would be apparent to one of skill in the art. While the following terms are believed to be well understood by one of ordinary skill in the art, the following definitions are set forth to facilitate explanation of the presently disclosed subject matter.

Components referred to by chemical name or formula anywhere in the specification or claims hereof, whether referred to in the singular or plural, are identified as they exist prior to coming into contact with another substance referred to by chemical name or chemical type (e.g., another component, a solvent, or etc.). It matters not what chemical changes, transformations and/or reactions, if any, take place in the resulting mixture or solution as such changes, transformations, and/or reactions are the natural result of bringing the specified components together under the conditions called for pursuant to this disclosure. Thus, the components are identified as ingredients to be brought together in connection with performing a desired operation or in forming a desired composition. Also, even though the claims hereinafter may refer to substances, components and/or ingredients in the present tense ("comprises," "is," etc.), the reference is to the substance, component or ingredient as it existed at the time just before it was first contacted, blended or mixed with one or more other substances, components and/or ingredients in accordance with the present disclosure. The fact that a substance, component or ingredient may have lost its original identity through a chemical reaction or transformation during the course of contacting, blending or mixing operations, if conducted in accordance with this disclosure and with ordinary skill of a chemist, is thus of no practical concern.

In describing the presently disclosed subject matter, it will be understood that a number of techniques and steps are disclosed. Each of these has individual benefit and each can also be used in conjunction with one or more, or in some cases all, of the other disclosed techniques.

Accordingly, for the sake of clarity, this description will refrain from repeating every possible combination of the individual steps in an unnecessary fashion. Nevertheless, the specification and claims should be read with the understanding that such combinations are entirely within the scope of the invention and the claims.

Following long-standing patent law convention, the terms "a", "an", and "the" refer to "one or more" when used in this application, including the claims. Thus, for example, reference to "a cell" includes a plurality of such cells, and so forth.

Unless otherwise indicated, all numbers expressing quantities of ingredients, reaction conditions, and so forth used in the specification and claims are to be understood as being modified in all instances by the term "about." Accordingly, unless indicated to the contrary, the numerical parameters set forth in this specification and attached claims are approximations that can vary depending upon the desired properties sought to be obtained by the presently disclosed subject matter.

As used herein, the term "about," when referring to a value or to an amount of a composition, dose, mass, weight, temperature, time, volume, concentration, percentage, etc., is meant to encompass variations of in some embodiments ±20%, in some embodiments ±10%, in some embodiments ±5%, in some embodiments ±1%, in some embodiments ±0.5%, and in some embodiments ±0.1% from the specified amount, as such variations are appropriate to perform the disclosed methods or employ the disclosed compositions.

The term "comprising", which is synonymous with "including" "containing" or "characterized by" is inclusive or open-ended and does not exclude additional, unrecited elements or method steps. "Comprising" is a term of art used in claim language which means that the named elements are essential, but other elements can be added and still form a construct within the scope of the claim.

As used herein, the phrase "consisting of" excludes any element, step, or ingredient not specified in the claim. When the phrase "consists of" appears in a clause of the body of a claim, rather than immediately following the preamble, it limits only the element set forth in that clause; other elements are not excluded from the claim as a whole.

As used herein, the phrase "consisting essentially of" limits the scope of a claim to the specified materials or steps, plus those that do not materially affect the basic and novel characteristic(s) of the claimed subject matter.

With respect to the terms "comprising," "consisting of," and "consisting essentially of," where one of these three terms is used herein, the presently disclosed and claimed subject matter can include the use of either of the other two terms.

As used herein, the term "and/or" when used in the context of a listing of entities, refers to the entities being present singly or in combination. Thus, for example, the phrase "A, B, C, and/or D" includes A, B, C, and D individually, but also includes any and all combinations and subcombinations of A, B, C, and D.

As used herein, the term "concentrated" when used in connection with a solution or in connection with a brine is meant to include a solution or brine that is saturated.

### General Procedure

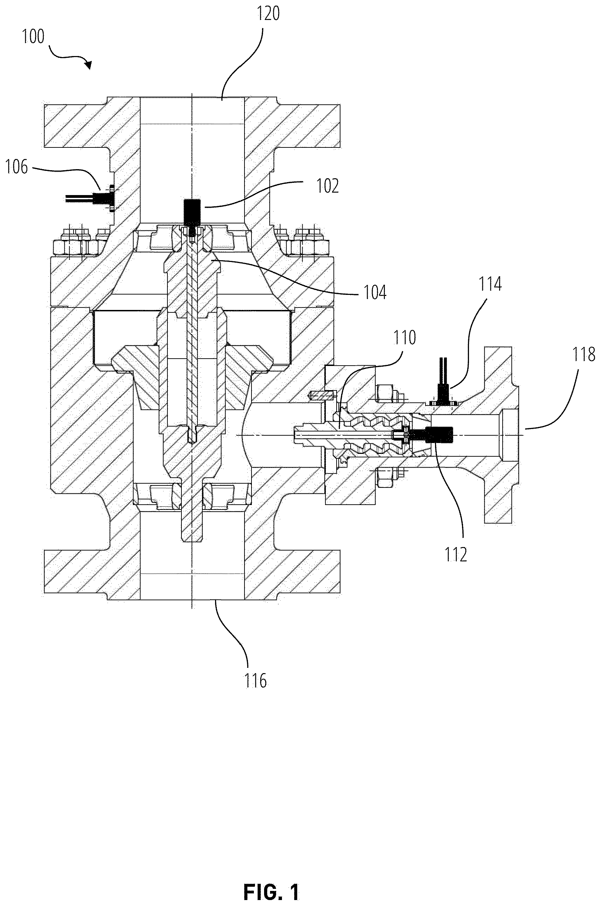

FIG. 1 is a cutaway illustration of a side view of an automatic recirculation valve in accordance with the present disclosure.

An automatic recirculation valve 100 is typically a multifunctional valve used to ensure that a pre-determined minimum flow is maintained through a centrifugal pump or other pumps or process equipment. The automatic recirculation valve 100 protects the pump from overheating, cavitation, and other damage.

The automatic recirculation valve 100 may include a flow sensing check valve disk or other feature that controls fluid flow to ensure a required fluid volume passes through the valve. The check valve disc, which is typically flow sensitive, modulates based on the demand for process flow at the same time helping ensure a minimum flow through a pump. This modulating characteristic results in a consistent, stable, and repeatable performance over a broad pressure range.

As illustrated in FIG. 1, when flow to the automatic recirculation valve 100 via the inlet 116 is low, such as a startup of a pump, a bypass cone 110 is open such that the fluid flows through the bypass portion of the automatic recirculation valve 100 and out of the bypass outlet 118. The automatic recirculation valve 100 includes a lifting cone 104 that opens when the flow into the automatic recirculation valve 100 has sufficient flow. The lifting cone 104 opens upward against a spring or other opposing force. When the lifting cone 104 opens, the bypass cone 110 becomes partially or fully closed. In examples, the bypass cone 110 is completely closed when sufficient flow enters the automatic recirculation valve 100. When the bypass cone 110 is closed, all flow into the automatic recirculation valve 100 is directed through the lifting cone 104 and out of the primary outlet 120.

If the flow volume is reduced into the automatic recirculation valve 100, the lifting cone 104 begins to close due to the lack of lifting force from the fluid flow. As the lifting cone 104 closes, the bypass cone 110 begins to open to allow at least a portion of the fluid to flow out of the bypass outlet 118. The flow from the bypass outlet 118 may be directed to the inlet of the pump to ensure that the pump has sufficient fluid flow.

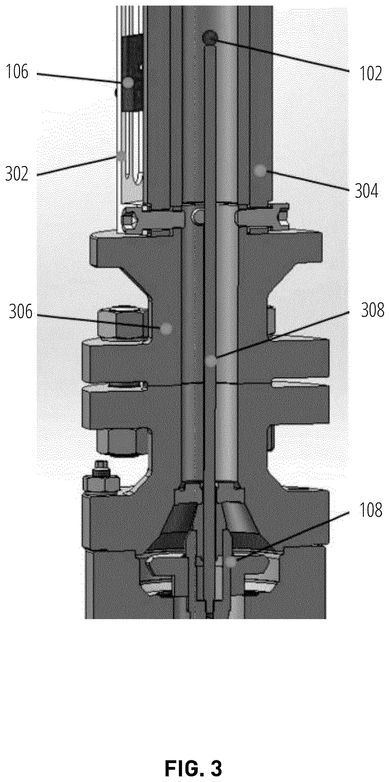

A primary magnet 102 may be configured to move with the linear rising and lowering of the lifting cone 104. In an example, the primary magnet 102 is affixed to a top surface of the lifting cone 104 on the downstream side of the lifting cone 104. The primary magnet 102 may be directly affixed to the lifting cone 104 such as by a screwed connection, a welded connection, or any other suitable mechanical connection. The primary magnet 102 may be connected to the lifting cone 104 by a pin or other mechanical linkage. A pin connection is described in greater detail with respect to FIG. 3. The primary magnet 102 may be any suitable magnet that provides sufficient magnetic flux density to a sensor. The primary magnet 102 may be a round, neodymium magnet.

The movement of the primary magnet 102 is detected by the primary sensor 106. The primary sensor 106 may be any type of magnetometer, proximity sensor, or other suitable sensor that detects a magnetic field produced by a magnetic object. The primary sensor 106 may use the magnetic field distortion created when a ferromagnetic material comes in the range. The magnetic field would vary with the movement, and a signal will be created by the primary sensor 106 based on the variance. The primary sensor 106 may use inductance, hall-effect principles, variable reluctance, magneto resistive technology, or any other suitable technology to detect the primary magnet 102.

The primary sensor 106 may be affixed to the body of the automatic recirculation valve 100 near the primary magnet 102. For example, the primary sensor 106 may be affixed to the outside of the primary outlet 120 near the primary magnet 102 such that the primary sensor 106 is nearest at least a portion of the travel range of the primary magnet 102. As illustrated, the primary magnet 102 is inside of the outlet pipe portion of the automatic recirculation valve 100, and the primary sensor 106 is directly outside of the outlet pipe portion of the automatic recirculation valve 100. When the lifting cone 104 is closed, the primary magnet 102 can be below a level of the primary sensor 106. When the lifting cone 104 is fully open, the primary magnet 102 may be at or above a level of the primary sensor 106. The primary sensor 106 may be affixed to the housing of the automatic recirculation valve 100 in any suitable manner, such as with a screwed connection, a flanged connection, a welded connection or in any other suitable connection type.

As the primary sensor 106 detects the movement of the primary magnet 102, the output of the primary sensor 106 provides a signal that corresponds to the position of the primary magnet 102. For example, when the primary magnet 102 is at a lowest point, the primary sensor 106 provides a signal corresponding to a lowest lifting cone position, such as 0%, 0 mm, or any other measure of the position of the lifting cone 104. The position of the primary magnet 102 may be correlated to the raised height of the lifting cone 104 and thus the flow rate of fluid through the primary flow path of the automatic recirculation valve 100. Accordingly, the lowest reading of the primary magnet 102 height may be correlated to a low flow condition, such as 0 gpm.

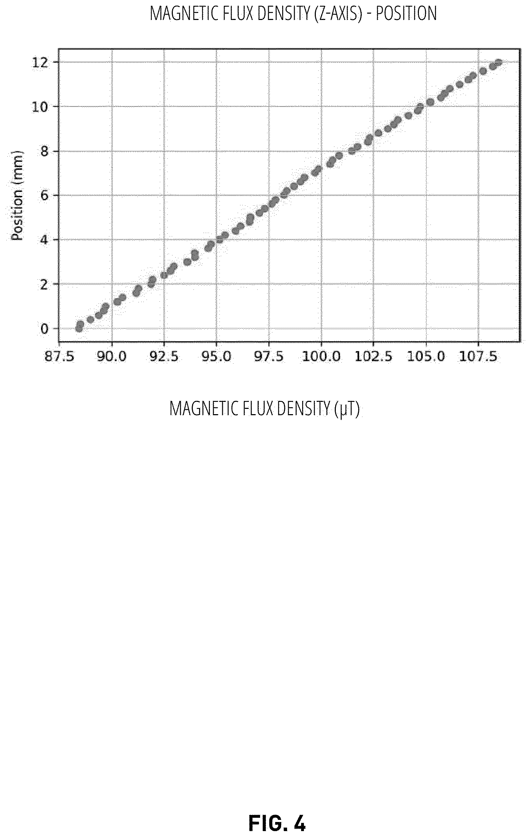

As the lifting cone 104 opens, the primary magnet 102 is raised a corresponding height. The primary sensor 106 registers the height of the primary magnet 102 and provides a signal corresponding to that level. For example, if the height is 50% of the total movement range of the primary magnet 102, then the primary sensor 106 may provide a signal that the automatic recirculation valve 100 is 50% open. In another example, the primary sensor 106 may provide a signal that 50% of the maximum flow volume is passing through the primary path of the automatic recirculation valve 100. In other examples, the height does not have a linear correspondence to the volume. In this instance a mathematical or algorithmic correlation between flow rate and primary magnet 102 position may be established. An example of this correlation is illustrated with respect to FIG. 4. In examples, a raw signal from the primary sensor 106 is interpreted, scaled, displayed, or otherwise processed by a process computer, such as a control system or a local computing device. In another example, the primary sensor 106 includes an onboard process computing device that performs signal processing before transmitting an output signal.

In a similar manner as the primary flow path, the bypass cone 110 opens and closes as the flow rate cycles, as described herein. The bypass cone 110 in the example opens horizontally when the fluid flow volume is low. The bypass magnet 112 is affixed to the bypass cone 110 in a similar manner as described with respect to the lifting cone 104 and the primary magnet 102. The bypass sensor 114 is configured to detect the movement of the bypass magnet 112 in a similar manner as described with respect to the primary magnet 102 and the primary sensor 106. A signal from the bypass sensor 114 may be processed to provide information related to the bypass cone 110 that is similar to the information related to the primary sensor 106, such as percent open, flow rate, or other information.

By monitoring one or both of the positions of the lifting cone 104 and the bypass cone 110, a user receives clear information about flow rates through the primary flow path and/or the bypass flow path. From this data, a user can configure pump sizes and operation parameters, optimize automatic recirculation valve 100 sizes and operation parameters, and calculate preferred sizes for new and replacement valves. A user may also use the data to monitor flow paths and modify upstream and downstream process equipment based on the data.

A user may use the data to monitor the times when the automatic recirculation valve 100 is experiencing flow through the primary outlet, the times when the automatic recirculation valve 100 is experiencing flow through the bypass outlet, and the times when a percentage of flow is pumping through each. Based on this data, pump operations may be sized, configured, or modified. Pump overload conditions can be observed and identified. Further, after certain running times, wear conditions can also be determined based on the data.

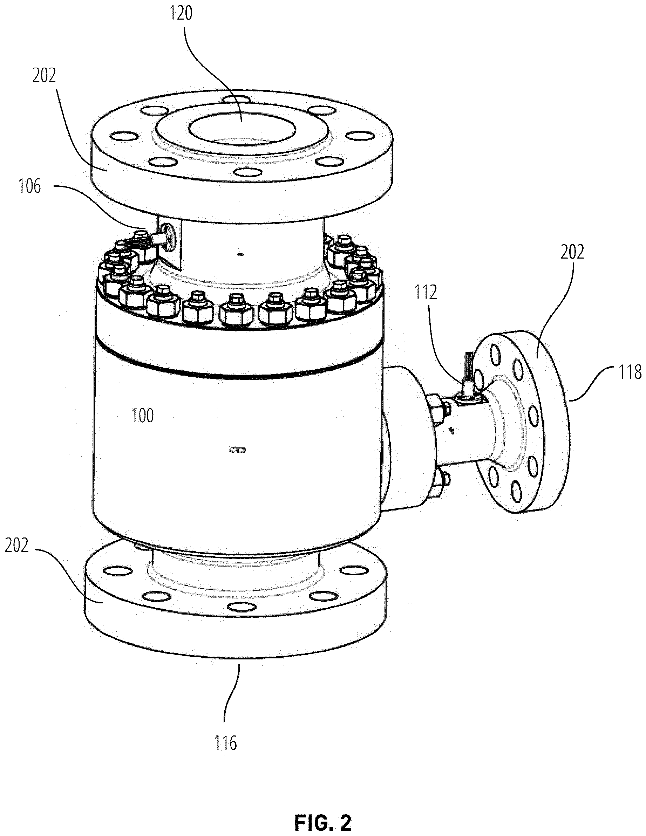

FIG. 2 is an illustration of a side perspective view of an automatic recirculation valve in accordance the present disclosure.

The automatic recirculation valve 100 of FIG. 2 may be substantially the same as the automatic recirculation valve 100 of FIG. 1. As illustrated, the automatic recirculation valve 100 includes a primary sensor 106 affixed to the housing of the automatic recirculation valve 100 near the primary outlet 120. The automatic recirculation valve 100 includes flanged connections 202 to connect to pipes or process equipment downstream of the automatic recirculation valve 100 at the primary outlet 120 and the bypass outlet 118, and upstream of the automatic recirculation valve 100 at the inlet 116. The automatic recirculation valve 100 includes a bypass sensor 114 affixed to the housing of the automatic recirculation valve 100 near the bypass outlet 118.

FIG. 3 is a cutaway illustration of a side view of an automatic recirculation valve with an adaptor in accordance the present disclosure. The automatic recirculation valve 100 valve of the type as illustrated in FIG. 3 was used for the Example 1 below.

The automatic recirculation valve 100 of FIG. 3 includes an adaptor 306 that extends the position of the primary magnet 102 away from the lifting cone 104. The primary magnet 102 is affixed to a pin 308 that is affixed to the lifting cone 104. The pin may be affixed to the lifting cone 104 in any suitable manner, such as a screwed connection or a welded connection. The pin 308 may be of any suitable length to allow the primary magnet 102 to within a detection zone of the primary sensor 106.

The adaptor 306 may be configured to be of any suitable length to connect the automatic recirculation valve 100 to the pipe section containing the primary sensor 106. The adaptor 306, the automatic recirculation valve 100, and the pipe sections may be connected in any suitable fashion, such as with flanged or screwed connections.

The primary sensor 106 is affixed to the pipe section as described herein. The primary sensor 106 is illustrated as being enclosed in a sensor housing 302. For example, the sensor housing 302 may be affixed to the automatic recirculation valve 100, the adaptor 306, or process piping to maintain a position of the primary sensor 106 in a desired location.

### EXAMPLE 1

Example measurements were carried out to show that a precise relationship can be established between the primary magnet position (and thus the corresponding lifting cone position) and the resulting magnetic flux density at the primary sensor 106. The measurement value recording was carried out on a modified automatic recirculation valve 100 as illustrated in FIG. 3. The requirement of the measuring system is to determine the position of the magnet, and thus the position of the lifting cone of an automatic recirculation valve 100. A mathematical function may then be determined on the basis of the recorded data that relates the lifting cone 104 position to the magnetic flux density. With the help of the characteristic curves, a measurement accuracy for the test setup is then determined. The determined functions are then stored as characteristic curves in an evaluation program in order to provide the operators with the function value and thus the taper position.

In the Example, a round, neodymium magnet was used. The magnetic flux density in the immediate vicinity of the magnet is around 3,568 mT. In order to illustrate that positioning also works under strong shielding of the magnetic field, the magnetic movement takes place in a thick-walled tube, with a wall thickness of 16.1 mm, in the main process flow pipe above the automatic recirculation valve 100.

The primary sensor 106 used in the example was a triple-axis magnetometer that can measure magnetic flux density across three axes (x, y, z). The results of the testing indicated that the cleanest data acquisition of the sensor values was detected on the z-axis of the sensor 106.

To open and close the lifting cone 104, a stepper motor is connected to the lifting cone 104. The lifting cone 104 has a maximum cone stroke of 12 mm. First, the optimal position for the primary sensor 106 is determined in order to maximize the accuracy and reliability of the measurement results. In order to determine the appropriate point, test measurements were carried out again. This is followed by the actual measurement process. The measurement time per position was set to 5 s. The measuring distance was adjusted to 0.2 mm intervals. A total of 61 measuring points can thus be recorded across the 12 mm range.

FIG. 4 is a graph of magnetic flux density based on valve position in accordance the present disclosure. The magnetic flux density versus the position of the primary magnet 102 were graphed. As illustrated, as the position of the primary magnet 102 moved upwards from 0 to 12 mm, the magnetic flux density increased in a roughly linear relationship. The magnetic flux density increased from approximately 88 to 108 µT. Based on the relationship, the position of the lifting cone 104 may be correlated to magnetic flux density in the z-axis of the primary sensor 106. This position may be correlated to flow volume of a fluid flowing through the primary flow path of the automatic recirculation valve 100.

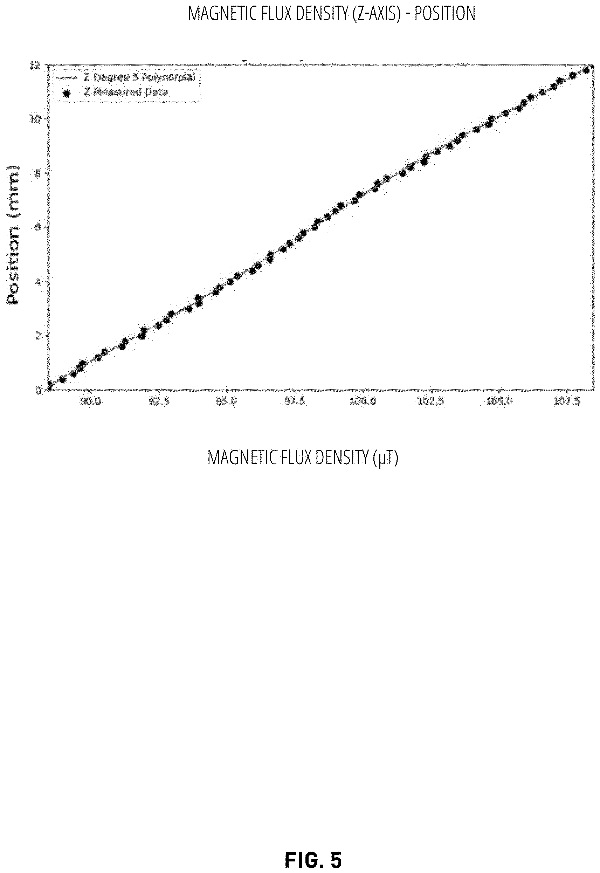

FIG. 5 is a graph of a fifth-degree polynomial function of the z-axis data of magnetic flux density based on valve position in accordance the present disclosure. The data of Example 1 may be fit to a polynomial function to represent a suitable approximation of the measured values.

A first-degree polynomial function of the data of the Example 1 may be represented by the equation: PZ,1(z) = 0.6059z - 53.53

A fifth-degree polynomial function of the data of the Example 1 may be represented by the equation: PZ,5(z) = 9.0287 × 10-6z5 - 4.431 × 10-3z4 + 0.8679z3 - 84.87z2 + 4143z - 8079 × 10

This graph illustrates that the data corresponds very closely to the fifth degree polynomial function. Accordingly, the data is closely correlated to the position of the lifting cone 104.

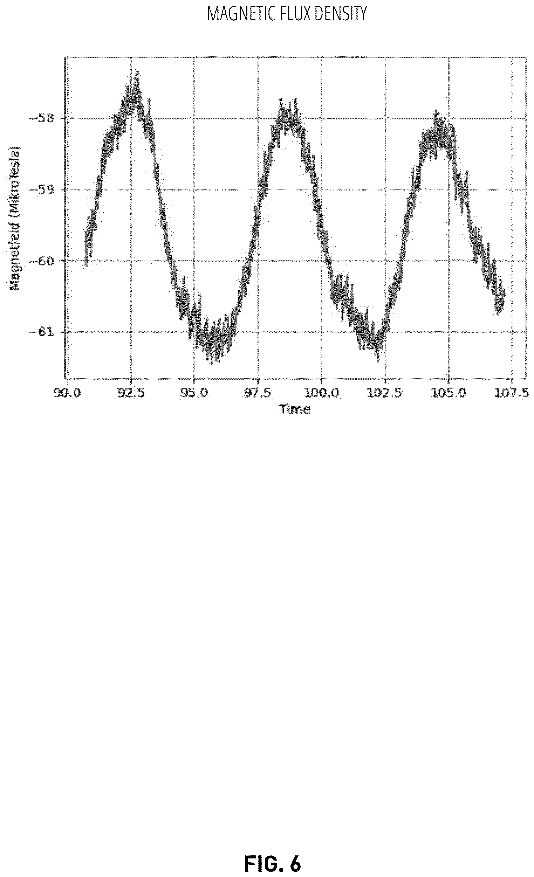

FIG. 6 is a graph of magnetic flux density over time for a rotating primary magnet 102 in accordance the present disclosure.

The primary magnet 102 may be mounted on a linkage to the lifting cone 104 such that the primary magnet 102 rotates as the lifting cone 104 raises and lowers. The linkage may be any suitable mounting hardware that causes the magnet to spin or rotate on an axis based on the linear motion of the lifting cone 104.

The rotation of the primary magnet 102 causes field line axes changes in strength or change in polarity. The primary sensor 106 can generate a clean amplitude image on a measuring device outside the automatic recirculation valve 100. In an example, a neodymium magnet provided a suitable magnetic signal when encased in an automatic recirculation valve 100 with material wall thicknesses of up to 80 mm.

By rotating the magnet inside the valve, a repeatable amplitude in the measuring device on the outside of the valve is generated. As illustrated in FIG. 6, the upper and lower turning points of the amplitude are the end positions of the rotational movement of the primary magnet 102. Accordingly, a 90° rotation of the primary magnet 102 corresponds to an amplitude height of the graph. Based on the known position of the lifting cone 104 and rotational position of the coupled primary magnet 102, a position of the lifting cone 104 may be determined.

While the present invention has been described in terms of one or more preferred embodiments, it is to be understood that other modifications may be made without departing from the scope of the invention, which is set forth in the claims below.

## Claims

1. A valve position monitoring device, comprising:
a magnetic component affixed to a lifting cone of a valve, wherein movement of the lifting cone causes a corresponding movement of the magnetic component; and
a sensor affixed to an external surface of the valve, wherein the sensor is configured to measure a position of the magnetic component based on magnetic flux density created by the magnetic component.

2. The valve position monitoring device of claim 1, wherein the magnetic component is affixed to the lifting cone of an automatic recirculation valve.

3. The valve position monitoring device of claim 1 or 2, wherein the magnetic component is affixed to the primary flow lifting cone via a mechanical linkage.

4. The valve position monitoring device of any of the claims 1-3, wherein the magnetic component is a neodymium magnet.

5. The valve position monitoring device of any of the preceding claims, wherein the sensor is a magnetometer sensor capable of identifying a magnetic flux density emitted by the magnetic component.

6. The valve position monitoring device of any of the preceding claims, wherein the sensor is configured to output a signal corresponding to a change in the identified magnetic flux density, preferably wherein the output signal correlates to a position of the lifting cone.

7. The valve position monitoring device of any of the preceding claims, wherein the magnetic component is affixed to the lifting cone via a screwed connection.

8. The valve position monitoring device of any of the preceding claims, wherein the sensor is mounted externally to the valve and/or the downstream flow.

9. The valve position monitoring device of any of the preceding claims, wherein the magnetic component is affixed to a bypass lifting cone on a downstream portion of the bypass flow.

10. The valve position monitoring device of any of the preceding claims, wherein the magnetic component is affixed to a mechanical linkage that causes the magnetic component to rotate about an axis as the lifting cone is raised and/or lowered.

11. An automatic recirculation valve position monitoring device, comprising:
a first magnetic component affixed to a lifting cone in a primary flow of an automatic recirculation valve, wherein movement of the lifting cone causes a corresponding movement of the first magnetic component;
a first sensor affixed to an external surface of the automatic recirculation valve, wherein the sensor is configured to measure a position of the magnetic component based on magnetic flux density created by the first magnetic component; wherein the first magnetic component is a valve position monitoring device according to any of the preceding claims,
a second magnetic component affixed to a bypass lifting cone on a downstream portion of the bypass flow, wherein movement of the bypass lifting cone causes a corresponding movement of the second magnetic component; and
a second sensor affixed to an external surface of the automatic recirculation valve, wherein the second sensor is configured to measure a position of the second magnetic component based on magnetic flux density created by the second magnetic component.

12. A method to measure a position of automatic recirculation valves, comprising:
affixing a magnetic component to a lifting cone of an automatic recirculation valve, wherein movement of the lifting cone causes a corresponding movement of the magnetic component;
affixing a sensor to an external surface of the automatic recirculation valve;
engaging a pump to deliver fluids to the automatic recirculation valve;
monitoring a movement of the lifting cone by sensing, with the sensor, a change in the magnetic flux density created by the magnetic component.

13. The method of claim 12, further comprising:
generating a signal by the sensor corresponding to the sensed change in the magnetic flux density created by the magnetic component.

14. The method of claim 13, wherein the signal correlates to a position of the lifting cone, and/or further comprising adjusting operations of the pump based on the generated signal.

15. The method of any of the claims 12-14 with one or more of the following:
- wherein the magnetic component is affixed to the lifting cone on a downstream portion of the lifting cone and inside the body of the automatic recirculation valve;
- wherein the sensor is a magnetometer sensor capable of identifying a magnetic flux density emitted by the magnetic component;
- wherein the magnetic component is affixed to the lifting cone via a screwed connection;
- wherein the magnetic component is affixed to the lifting cone via a mechanical linkage.
